# EUROPÄISCHE PATENTANMELDUNG

(11) **EP 1 795 098 A1**
(43) Veröffentlichungstag der Anmeldung: **13.06.2007**
(21) Anmeldenummer: 06025415.8
(22) Anmeldetag: 08.12.2006
(51) Int. Cl.: A47J 43/044

(54) **Haltevorrichtung für Zerkleinerungs- oder Rührgeräte zur Lebensmittelzubereitung, insbesondere Speiseeiszubereitung**

(30) Priorität: 08.12.2005 DE 202005019317 U
(71) Anmelder: Paolozza, Mario, 55243 Albig (DE)
(72) Erfinder: Paolozza, Mario, 55243 Albig (DE)
(74) Vertreter: Wüstefeld, Regine Marie

(57) **Zusammenfassung**

Die Erfindung betrifft eine Haltevorrichtung für Zerkleinerungs- oder Rührgeräte zur Lebensmittelzubereitung, insbesondere zur Speiseeiszubereitung. Die Haltevorrichtung ermöglicht die Halterung unterschiedlicher Zerkleinerungs- oder Rührgeräte, durch ein Gestell (3) und einen Haltearm (4) zur Befestigung des Zerkleinerungs- oder Rührgerätes (2), wobei der Haltearm (4) höheneinstellbar am Gestell (3) angeordnet ist und an seinem freien Ende eine auf das Zerkleinerungs- oder Rührgeräte (2) einstellbare Befestigungseinrichtung (5) aufweist.

## Beschreibung

Die vorliegende Erfindung betrifft eine Haltevorrichtung für Zerkleinerungs- oder Rührgeräte zur Lebensmittelzubereitung, insbesondere zur Speiseeiszubereitung.

Aus der Praxis sind im Bereich der Lebensmittelzubereitung, insbesondere betreffend die Eiszubereitung, Vorrichtungen bekannt, wobei ein Zerkleinerungsgerät oder ein Rührgerät mit einer Haltevorrichtung eine Gesamtvorrichtung ausbildet. Das Zerkleinerungsgerät oder Rührgerät umfasst dabei eine Antriebseinheit zur Rotation einer Welle, an deren freien Ende sich ein Rühr- oder Zerkleinerungswerkzeug befindet, je nach dem, ob homogenisiert oder zerkleinert werden soll. Die aus der Praxis bekannte Gesamtvorrichtung enthält einen Hubmechanismus, mit dem das Rühr- oder Zerkleinerungsgerät auf und ab bewegt werden kann und so ein Behälter unterhalb des Rühr- oder Zerkleinerungsgerätes angeordnet werden kann, der die Lebensmittel enthält. Derartige Vorrichtungen sind recht kostenintensiv in der Anschaffung und werden vor allem zur Speiseeiszubereitung verwendet. In Speiseeislabors, die nicht über eine bekannte Gesamtvorrichtung verfügen, werden Zerkleinerungs- oder Rührgeräte, manuell gehalten und das Rühr- oder Zerkleinerungswerkzeug von Hand in den Behälter mit den Zutaten eingeführt.

Die aus der Praxis bekannte Gesamtvorrichtung ist dahingehend nachteilig, dass die Vorrichtung nur mit dem bestimmten, ihr fix zugeordneten Rühr- oder Zerkleinerungsgerät zusammenwirken kann. Ein Austausch des Rühr- oder Zerkleinerungsgerätes gegen ein anderes, ggf. bereits vorhandenes Rühr- oder Zerkleinerungsgerät ist nicht möglich. Insbesondere Eisdielen verfügen in der Regel bereits über separate Rührgeräte, die der bekannten Vorrichtung aber nicht zugeordnet werden können und ohne Haltevorrichtung bedient werden. Ist die bekannte Gesamtvorrichtung schadhaft, muss ein neues teures Gerät mit integriertem Zerkleinerungs- oder Rührgerät angeschafft werden.

Ausgehend von dem aus der Praxis bekannten Stand der Technik liegt der Erfindung die Aufgabe zugrunde, eine Haltevorrichtung anzugeben, die die Halterung unterschiedlicher Zerkleinerungs- oder Rührgeräte ermöglicht.

Die voranstehende Aufgabe wird durch die Merkmale des Schutzanspruches 1 gelöst. Danach weist eine Haltevorrichtung für Zerkleinerungs- oder Rührgeräte zur Lebensmittelzubereitung, insbesondere zur Speiseeiszubereitung ein Gestell und einen Haltearm zur Befestigung des Zerkleinerungs- oder Rührgerätes auf, wobei der Haltearm höheneinstellbar am Gestell angeordnet ist und an seinem freien Ende eine auf das Zerkleinerungs- oder Rührgerät einstellbare Befestigungseinrichtung aufweist.

Ausgehend von dem aus der Praxis bekannten Stand der Technik ist zunächst erkannt worden, dass Haltevorrichtungen für Rührgeräte immer nur innerhalb teurer Gesamtvorrichtungen existieren, die stets nur ein speziell auf die Gesamtvorrichtung abgestimmtes Zerkleinerungs- oder Rührgerät umfassen, wobei die Hinzufügung eines bereits vorhandenen Rührgerätes ausgeschlossen ist. Erfindungsgemäß ist erkannt worden, dass die Halterung unterschiedlicher Zerkleinerungs- oder Rührgeräte ermöglicht werden kann, wenn die Haltevorrichtung eine Befestigungseinrichtung aufweist, die auf das Zerkleinerungs- oder Rührgerät einstellbar ist. Auf diese Weise wird die Möglichkeit eröffnet, bereits vorhandene oder kostengünstige Zerkleinerungs- oder Rührgeräte in der Haltevorrichtung zu befestigen.

Damit die Einstellung vorgenommen werden kann, könnte die Befestigungseinrichtung Klemmbacken aufweisen, deren Abstand variierbar ist. Die Abstandsvariation der Klemmbacken könnte beispielsweise mittels einer Stellschraube erfolgen. Alternativ könnten die Klemmbacken aber auch mittels form- und/oder kraftschlüssigen Verbindungsmitteln in ihrem Abstand zueinander eingestellt werden. So sind bspw. mehrstufige Rastverbindungen möglich.

In der Regel weist die Antriebseinheit ein Anschlussstück auf, in welchem die Welle angeordnet ist, an deren freiem Ende das Zerkleinerungs- oder Rührwerkzeug befestigt ist. Solch ein Anschlussstück definiert den Bereich, in dem die Befestigungseinrichtung der erfindungsgemäßen Haltevorrichtung angreift. Da nun Querschnitt oder Durchmesser der Anschlussstücke der verschiedenen Zerkleinerungs- oder Rührgeräte durchaus stark differieren können, könnten die Klemmbacken auswechselbare, vorzugsweise aus Kunststoff bestehende, Einsätze verschiedener Stärken zur Anpassung an die Geometrie des Zerkleinerungs- oder Rührgerätes aufweisen. Dabei könnte die Klemmbacke im Querschnitt profiliert sein und eine Aufnahme für den Einsatz ausbilden.

Zweckmäßigerweise könnte das Gestell einen Fuß und eine Säule umfassen, wobei der Fuß zwei beabstandete Standflächen aufweist, die durch einen Querträger miteinander verbunden sind. Zwischen den beabstandeten Standflächen könnte ein Behälter angeordnet werden, in den das Zerkleinerungs- oder Rührgerät herabgesenkt wird. Die Säule könnte in vorteilhafter Weise auf dem Querträger angeordnet sein und einen Hubmechanismus umfassen. Der Haltearm mit der Befestigungseinrichtung für das Zerkleinerungs- oder Rührgerät könnte an einem Schlitten angeordnet sein, der an der Säule entlang in der Höhe verfahrbar ist.

Der Hubmechanismus könnte zumindest einen Seilzug, gemäß einem bevorzugten Ausführungsbeispiel zwei Seilzüge, umfassen, wobei ein Ende jedes Seilzuges mit dem Schlitten verbunden ist und das andere Ende mit einem Gewicht versehen ist. Zur Realisierung der Auf- und Abbewegung könnte pro Seilzug je eine Umlenkrolle vorgesehen sein.

Damit das Gewicht oder bei zwei Seilzügen die Gewichte innerhalb der Säule nicht frei pendelt bzw. pendeln und Beschädigungen verursacht bzw. verursachen, könnten vorzugsweise hülsenförmige Aufnahmen für die Gewichte vorgesehen sein. Die hülsenförmigen Aufnahmen könnten auf dem Querträger angeordnet sein. Um eine Beschädigung der hülsenförmigen Aufnahmen für das Gewicht zu vermeiden, könnte an deren oberen Ende ein Dämpfungselement aufweisen, auf das eine Schulter oder eine Auflagefläche des Gewichts aufsetzt, wenn sich der Schlitten in hochgefahrener Stellung und das Gewicht weitgehend in der hülsenförmigen Aufnahme befindet. Das Gewicht könnt am oberen Bereich eine Querschnittserweiterung aufweisen, die die Auflagefläche zur Kontaktierung des Dämpfungselementes ausbildet.

Der Schlitten könnte über eine Laufrolle entlang der Säule verfahren werden. Dabei könnte die Säule eine Schiene ausbilden. Aus Stabilitätsgründen könnte sowohl an der Vorderseite der Säule als auch an der Rückseite der Säule mindestens eine Laufrolle vorgesehen sein. Im Hinblick auf die Lastaufnahme der Befestigungseinrichtung und die Vibration des Zerkleinerungs- oder Rührgerätes ist es von Vorteil, wenn gerade die an der Rückseite der Säule vorgesehene Laufrolle ein Einstellelement zur Spannungsregulierung aufweist. Eine durch die Belastung stattfindende Lockerung der Führung kann auf diese Weise beseitigt werden.

Der Schlitten mit der Befestigungseinrichtung und dem Zerkleinerungs- oder Rührgerät wird nach unten bewegt, um das Zerkleinerungs- oder Rührgerät in den Behälter einzubringen. Um den Behälter nach dem Zerkleinerungs- oder Homogenisierungs- bzw. Rührvorgang wieder freizugeben, wird der Schlitten hochgefahren und in die Ruhestellung verbracht, wobei das Gewicht oder die Gewichte in die hülsenförmigen Aufnahmen versenkt wird bzw. werden. In der Betriebsstellung - wobei das Zerkleinerungs- oder Rührgerät in den Behälter hineinragt - ist es erforderlich, dass der Schlitten mit der Befestigungseinrichtung und dem Zerkleinerungs- oder Rührgerät gesichert ist. Hierzu ist eine Arretiereinrichtung vorgesehen ist, die den Schlitten in der gewünschten Höhe fixiert. In konstruktiver Hinsicht könnte die Arretierungseinrichtung eine Sperrklinke umfassen, die an einem Anschlag im unteren Bereich der Säule einrastet, sowie einen Hebel zum Lösen der Arretierung.

Um das Verfahren des Schlittens von der unteren Betriebsstellung in die obere Ruhestellung zu erleichtern, könnte im unteren Bereich der Säule eine Feder vorgesehen sein, die beim Herunterfahren des Schlittens zusammengedrückt wird und beim Hochfahren des Schlittens die Aufwärtsbewegung durch die Rückstellkraft unterstützt.

Eine Verbesserung der Handhabung des Schlittens im Hinblick auf die erforderliche Auf- und Abbewegung wird erreicht, wenn am Schlitten ein Griff zur manuellen Höheneinstellung angeordnet ist. Alternativ zu einer manuellen Betätigung des Schlittens könnte die Schlittenbewegung auch elektromotorisch über einen Stellmotor oder auch hydraulisch realisiert werden.

Zum Schutz der Hubmechanik und für ein ansprechendes optisches Erscheinungsbild könnte die Säule eine Verkleidung aufweisen. Die Verkleidung könnte eine vertikale, schlitzartige Öffnung aufweisen, die von dem Haltearm mit der Befestigungseinrichtung durchgriffen ist. Auf diese Weise kann der Schlitten entlang der Säule verfahren werden. Eine besonders bevorzugte Ausgestaltung sieht vor, der Verkleidung einen Stromanschluss zuzuordnen. Dieser könnte in vorteilhafter Weise benachbart zum Fuß angeordnet sein, unter der Maßgabe, dass die Stromzufuhr zum Zerkleinerungs- oder Rührgerät nur dann realisiert wird, wenn sich der Schlitten in heruntergefahrener Betriebsstellung befindet und das Zerkleinerungs- oder Rührwerkzeug in den Behälter hineinragt. Auf diese Weise wird die Unfallgefahr herabgesetzt. Eine weitere vorteilhafte Ausgestaltung der Verkleidung sieht vor, dieser eine Schaltung zur Einstellung der Arbeitszeit des Zerkleinerungs- oder Rührgerätes zuzuordnen. Diese Schaltung kann Einstellmittel uns auch eine Anzeige umfassen.

Es gibt nun verschiedene Möglichkeiten, die Lehre der vorliegenden Erfindung in vorteilhafter Weise auszugestalten und weiterzubilden. Dazu ist einerseits auf die dem Schutzanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des angeführten Ausführungsbeispiels der Erfindung werden auch im allgemeinen bevorzugte Ausgestaltungen und Weiterbildungen der Lehre erläutert. In der Zeichnung zeigen
- Fig. 1: in schematischer Perspektivdarstellung, eine Vorderansicht der erfindungsgemäßen Haltevorrichtung,
- Fig. 2: in schematischer Perspektivdarstellung, eine Vorderansicht der erfindungsgemäßen Haltevorrichtung - ohne Verkleidung und Rührgerät, in hochgefahrener Ruhestellung
- Fig. 3: in schematischer Perspektivdarstellung, eine Seitenansicht der erfindungsgemäßen Haltevorrichtung - ohne Verkleiddung und Rührgerät, in heruntergefahrener Betriebsstellung und
- Fig. 4: in schematischer Darstellung, eine vergrößerte Darstellung der Arretiereinrichtung.

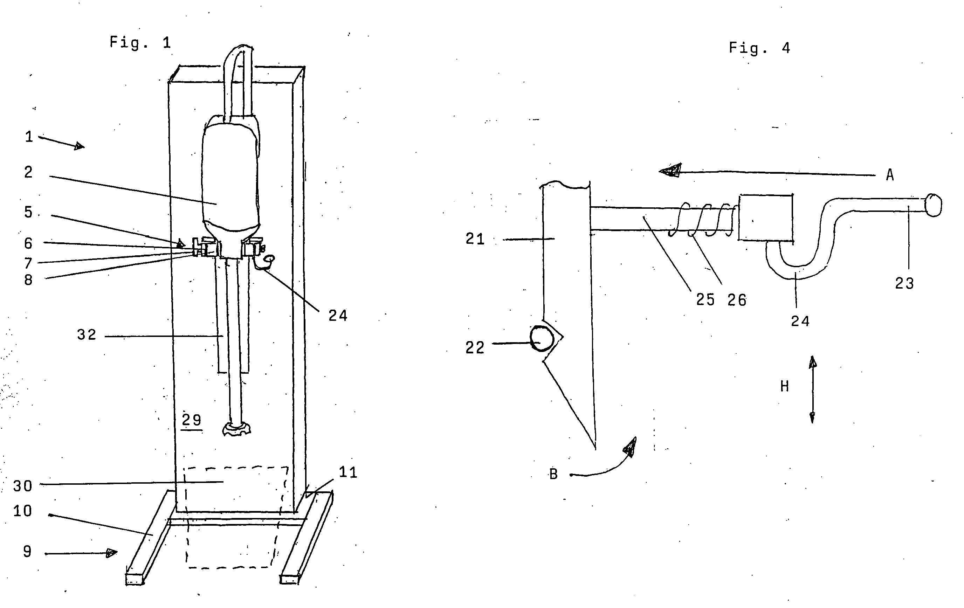

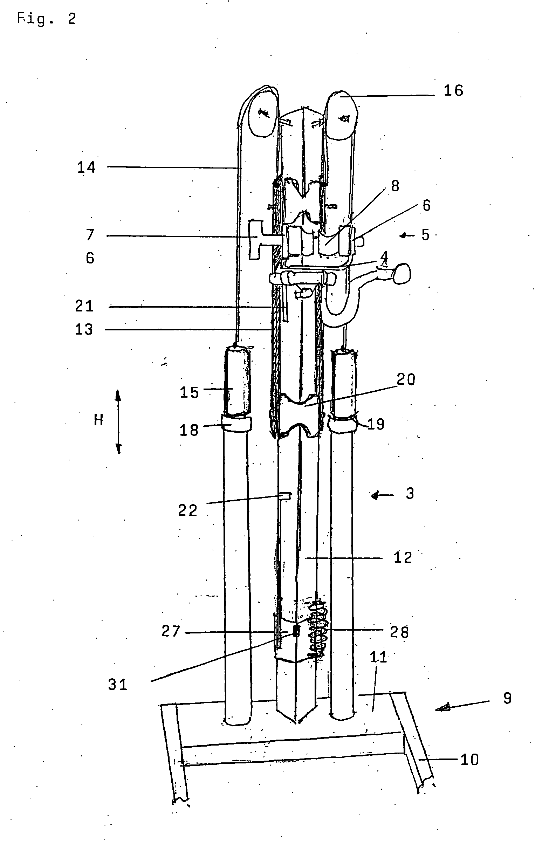

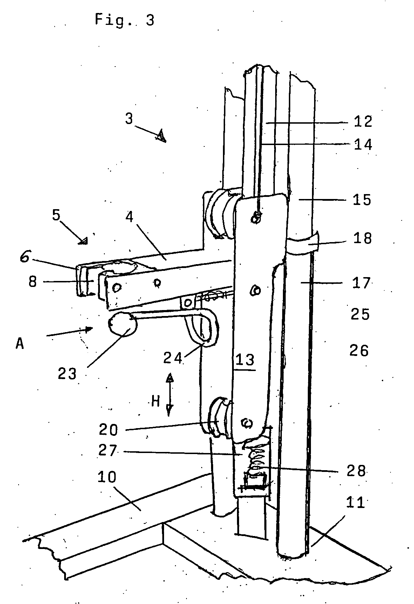

Aus Fig. 1 ist eine Haltevorrichtung 1 gezeigt. Hier dient die Haltevorrichtung 1 zum Halten eines Rührgerätes 2 zur Speiseeiszubereitung. Die Fig. 2 und 3 zeigen ein Gestell 3 und einen Haltearm 4 zur Befestigung des Rührgerätes 2. Der Haltearm 4 ist höheneinstellbar am Gestell 3 angeordnet und weist an seinem freien Ende eine auf das Rührgerät 2 einstellbare Befestigungseinrichtung 5 auf.

Die Befestigungseinrichtung 5 umfasst zwei Klemmbacken 6, deren Abstand mittels einer Stellschraube 7 variierbar ist. Die Klemmbacken 6 auswechselbare, vorzugsweise aus Kunststoff bestehende, Einsätze 8 verschiedener Stärken zur Anpassung an die Geometrie des Rührgerätes 2 aufweisen.

Aus den Fig. 1 bis 3 ist ersichtlich, dass das Gestell 3 einen Fuß 9 mit zwei beabstandeten Standflächen 10 aufweist, die durch einen Querträger 11 miteinander verbunden sind.

Auf dem Querträger 11 ist in etwa mittig eine Säule 12 angeordnet, an der ein Hubmechanismus vorgesehen ist. Der Haltearm 4 ist an einem Schlitten 13 angeordnet, der an der Säule 12 entlang dem Pfeil H in der Höhe nach oben und unten verfahrbar ist. Der Hubmechanismus umfasst zwei Seilzüge 14, wobei ein Ende jedes Seilzuges 14 mit dem Schlitten 13 verbunden ist und das andere Ende mit einem Gewicht 15 versehen ist. Jeder Seilzug 14 ist über eine am oberen Ende der Säule 12 angeordnete Umlenkrolle 16 umgelenkt. Auf dem Querträger 11 ist zu beiden Seiten der Säule 12 je eine hülsenförmige Aufnahme 17 für das jeweilige Gewicht 15 angeordnet.

Die beiden hülsenförmigen Aufnahmen 17 haben an ihrem oberen Ende ein Dämpfungselement 18, auf das eine Auflagefläche 19 des Gewichts 15 aufsetzt, wenn sich der Schlitten 13 in hochgefahrener Stellung befindet. In Fig. 2 ist gezeigt, dass das Gewicht 15 am oberen Ende eine Querschnittserweiterung aufweist, deren nach unten weisende Fläche die Auflagefläche 19 bildet. Bei dieser Darstellung befindet sich der Schlitten in hochgefahrener Ruhestellung und die Gewichte sind zum größten Teil in den Aufnahmehülsen 17 versenkt.

Der Schlitten 13 weist zwei Laufrollen 20 auf, die entlang der Vorderseite der Säule 12 verfahrbar sind. Auch an der Rückseite der Säule 12 ist eine hier nicht dargestellte Laufrolle vorgesehen, die ein Einstellelement zur Spannungsregulierung aufweist. Die Säule ist an der Vorderseite im Sinne einer Schiene ausgebildet, an der die Vertiefung der beiden Laufrollen 20 abrollt.

Bei dem vorliegenden Ausführungsbeispiel weist die erfindungsgemäße Haltevorrichtung eine Arretiereinrichtung vorgesehen ist, die den Schlitten 13 in der Betriebsstellung fixiert. Die Betriebsstellung wird erreicht, wenn der Schlitten 13 nach unten gefahren wird. Die in Fig. 4 genauer gezeigte Arretierungseinrichtung umfasst eine Sperrklinke 21, die an einem Anschlag 22 im unteren Bereich der Säule 12 einrastet, sowie einen Betätigungselement 23 zum Lösen der Arretierung. Das Betätigungselement 23 hat hier eine Doppelfunktion. Es ist so geformt, dass ein Abschnitt als Griff 24 zum Verfahren des Schlittens 13 entlang der Säule 12 gemäß Pfeil H dient und über das freie Ende die Lösung der Arretiereinrichtung, bzw. der Sperrklinke 21 vom Anschlag 22 vorgenommen wird. Bewegt man das freie Ende des Betätigungselementes 23 gemäß Pfeil A wird eine Stange 25 unter Zusammendrücken einer Feder 26 gegen die drehbar gelagerte Sperrklinke 22 gedrückt und deren Freigabe in Richtung des Pfeils B bewirkt. Sobald die Freigabe realisiert ist, bewegen sich die Gewichte 15 nach unten in die Aufnahmehülsen 17 und der Schlitten 13 fährt nach oben.

Die Fig. 2 und 3 zeigen, dass die Säule 12 im unteren Bereich eine Manschette 27 mit nicht näher bezeichneten Haltemitteln für eine Feder 28 vorgesehen ist, die beim Herunterfahren des Schlittens 13 in die Betriebsstellung des Rührgerätes 2 zusammengedrückt wird und beim Hochfahren des Schlittens 13 in die Ruhestellung nach Lösen der Sperrklinke 21 die Aufwärtsbewegung durch die Rückstellkraft unterstützt. An der Manschette 27 ist gemäß Fig. 2 ein Auflager 31 vorgesehen, auf dem die untere der beiden Laufrollen 20 an der Vorderseite der Säule 12 während der Betriebsstellung der Haltevorrichtung aufliegt.

Fig. 1 zeigt, dass die Säule 12 eine Verkleidung 29 aufweist. Mit gestrichelter Linie und der Bezugsziffer 30 ist ein Behälter angedeutet, in den das Rührwerkzeug des Rührgerätes 2 in der in Fig. 3 gezeigten Betriebsstellung hineinragt. Die Verkleidung 29 hat eine Öffnung 32, die vom Haltearm 4 mit der Befestigungseinrichtung 5 durchgriffen wird.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf das voranstehend erörterte Ausführungsbeispiel eingeschränkt ist. Vielmehr sind die unterschiedlichsten Ausbildungen der Haltevorrichtung im Hinblick auf die Hubmechanik, die Befestigungseinrichtung sowie Arretierungstechniken möglich. Auch im Hinblick auf Anwendungsmöglichkeiten beschränkt sich die Erfindung nicht auf die Speiseeisherstellung, sondern es kommen auch Anwendungen in anderen Lebensmittelbereichen, eventuell sogar im Baubereich in Betracht.

## Patentansprüche

1. Haltevorrichtung für Zerkleinerungs- oder Rührgeräte zur Lebensmittelzubereitung, insbesondere zur Speiseeiszubereitung, mit einem Gestell (3) und einem Haltearm (4) zur Befestigung des Zerkleinerungs- oder Rührgerätes (2), wobei der Haltearm (4) höheneinstellbar am Gestell (3) angeordnet ist und an seinem freien Ende eine auf das Zerkleinerungs- oder Rührgeräte (2) einstellbare Befestigungseinrichtung (5) aufweist.

2. Haltevorrichtung nach Anspruch 1, **dadurch gekennzeichnet, dass** die Befestigungseinrichtung (5) Klemmbacken (6) aufweist, deren Abstand, insbesondere mittels einer Stellschraube (7), variierbar ist.

3. Haltevorrichtung nach Anspruch 2, **dadurch gekennzeichnet, dass** die Klemmbacken (6) auswechselbare, vorzugsweise aus Kunststoff bestehende, Einsätze (8) verschiedener Stärken zur Anpassung an die Geometrie des Zerkleinerungs- oder Rührgerätes (2) aufweisen.

4. Haltevorrichtung nach einem der Ansprüche 1 bis 3, **dadurch gekennzeichnet, dass** das Gestell (3) einen Fuß (9) und eine Säule (12) umfasst.

5. Haltevorrichtung nach Anspruch 4, **dadurch gekennzeichnet, dass** der Fuß zwei beabstandete Standflächen (10) aufweist, die durch einen Querträger (11) miteinander verbunden sind.

6. Haltevorrichtung nach Anspruch 5, **dadurch gekennzeichnet, dass** die Säule (12) auf dem Querträger (11) angeordnet ist.

7. Haltevorrichtung nach einem der Ansprüche 1 bis 6, **dadurch gekennzeichnet, dass** die Säule (12) einen Hubmechanismus umfasst und dass der Haltearm (4) an einem Schlitten (13) angeordnet ist, der an der Säule (12) entlang in der Höhe verfahrbar ist.

8. Haltevorrichtung nach Anspruch 7, **dadurch gekennzeichnet, dass** der Hubmechanismus mindestens einen Seilzug (14) umfasst, wobei ein Ende des Seilzuges (14) mit dem Schlitten (13) verbunden ist und das andere Ende mit einem Gewicht (15) versehen ist.

9. Haltevorrichtung nach Anspruch 8, **dadurch gekennzeichnet, dass** der Hubmechanismus eine Umlenkrolle (16) für den Seilzug (14) umfasst.

10. Haltevorrichtung nach Anspruch 8 oder 9, **dadurch gekennzeichnet, dass** auf dem Querträger (11) eine hülsenförmige Aufnahme (17) für das Gewichte (15) angeordnet ist.

11. Haltevorrichtung nach Anspruch 10, **dadurch gekennzeichnet, dass** die hülsenförmige Aufnahme (17) an ihrem oberen Ende ein Dämpfungselement (18) aufweist, auf dem eine Anlagefläche (19) einer Querschnittserweiterung des Gewichts (15) aufsetzt, wenn sich der Schlitten (13) in hochgefahrener Stellung befindet.

12. Haltevorrichtung nach einem der Ansprüche 7 bis 11, **dadurch gekennzeichnet, dass** der Schlitten (13) mittels mindestens einer Laufrolle (20) entlang der Säule (12) verfahrbar ist.

13. Haltevorrichtung nach Anspruch 12, **dadurch gekennzeichnet, dass** sowohl an der Vorderseite der Säule (12) als auch an der Rückseite der Säule (12) mindestens eine Laufrolle (20) vorgesehen ist.

14. Haltevorrichtung nach einem der Ansprüche 7 bis 13, **dadurch gekennzeichnet, dass** eine Arretiereinrichtung vorgesehen ist, die den Schlitten (13) in der gewünschten Höhe fixiert.

15. Haltevorrichtung nach Anspruch 14, **dadurch gekennzeichnet, dass** die Arretierungseinrichtung eine Sperrklinke (21) umfasst, die an einem Anschlag (22) im unteren Bereich der Säule (12) einrastet, sowie ein Betätigungselement (23) zum Lösen der Arretierung.

16. Haltevorrichtung nach einem der Ansprüche 7 bis 15, **dadurch gekennzeichnet, dass** im unteren Bereich der Säule (12) eine Feder (26) vorgesehen ist, die beim Herunterfahren des Schlittens (13) zusammengedrückt wird und beim Hochfahren des Schlittens (13) die Aufwärtsbewegung durch die Rückstellkraft unterstützt.

17. Haltevorrichtung nach einem der Ansprüche 7 bis 16, **dadurch gekennzeichnet, dass** am Schlitten (13) ein Griff (24) zur manuellen Höheneinstellung angeordnet ist.

18. Haltevorrichtung nach einem der Ansprüche 4 bis 17, **dadurch gekennzeichnet, dass** die Säule (12) eine Verkleidung (29) aufweist und dass die Verkleidung einen Stromanschluss und / oder eine Schaltung zur Einstellung der Arbeitszeit des Zerkleinerungs- oder Rührgerätes (2) umfasst.
